# EUROPEAN PATENT SPECIFICATION

(11) **EP 1 504 657 B1**
(45) Date of publication and mention of the grant of the patent: **13.09.2006**
(21) Application number: 04016489.9
(22) Date of filing: 13.07.2004
(51) Int. Cl.: A01G 3/053

(54) **Handle assembly for power tool**
Griffanordnung für ein Kraftwerkzeug
Assemblage de poignées pour outil motorisé

(30) Priority: 04.08.2003 GB 0318150; 09.08.2003 GB 0318751; 17.05.2004 GB 0410918
(43) Date of publication of application: 09.02.2005
(73) Proprietor: Black & Decker Inc., Newark, Delaware 19711 (US)
(72) Inventor: Stones, Kevin, Bishop Auckland County Durham DL14 6AE (GB)
(74) Representative: Cavalier, Marcus Alexander Mawson

(56) References cited:
- EP-A- 0 834 248
- EP-A- 1 020 257
- DE-A- 19 527 207
- US-A- 5 687 483

## Description

The present invention relates to a handle assembly for a power tool, and a power tool incorporating such an assembly. The invention relates particularly, but not exclusively, to handle assembly for a hedge trimmer, and a hedge trimmer incorporating such a mechanism.

Hedge trimmers are power tools for general garden use with an axially reciprocating blade comprising a plurality of teeth disposed adjacent a stationary blade, the teeth of the stationary blade providing a reaction force for the teeth of the reciprocating blade.

Most hedge trimmers are provided with two handles for the user to grip. This is generally for two reasons. Firstly, a hedge trimmer is easier to manipulate when held with both hands than when held with one hand. This provides the user with greater control over the hedge trimmer and therefore facilitates more accurate cutting. Secondly, a two handed grip is a safety feature. It is significantly easier to lose control of a hedge trimmer when holding it with one hand, and therefore a two handed grip allows much safer use of the hedge trimmer (see e.g. DE 195 27 207 A).

The heaviest components of a hedge trimmer are generally the blade assembly and the electric motor contained in the housing. For this reason, the centre of mass of the hedge trimmer usually lies between the blades and the motor. In order to provide a good pivot point for control over the blade, the front handle of the trimmer is usually placed in front of the centre of mass. Consequently, if the user releases the rear handle, the blade will swing in the upwards direction.

In order to improve the handling of the hedge trimmer, it is desirable to locate the rear handle as far away from the centre of mass as possible. This is to allow the user to apply the same torque to the blade about the front handle, with as little force to the rear handle as possible. A drawback of trying to accomplish this feature, however, is that in locating the rear handle further away from the front handle, the total weight of the hedge trimmer may have to be increased, as more material would have to go into the construction of the handles.

A known hedge trimmer supplied by Flymo SA, for example under the trade mark FLYMO EASI-TRIM EHT 420, has a handle assembly in which front and rear handles are formed as opposite sides of a generally symmetrical loop. This known hedge trimmer suffers from the drawback that the front handle is generally located further away from the centre of the symmetrical loop than is necessary, which results in unnecessary increase of the weight of the handle assembly, and may make the hedge trimmer more difficult to hold.

Preferred embodiments of the present invention seek to overcome the above disadvantage of the prior art.

According to an aspect of the present invention, there is provided a handle assembly for a power tool having a housing, a motor provided in the housing and an output shaft adapted to be caused by the motor to execute reciprocating motion, the assembly comprising:-
a front handle;
a rear handle integral with said front handle; and
a mounting portion adapted to be mounted to the body of the tool; wherein said front handle defines a first aperture, and said rear handle defines a second aperture larger than said first aperture.

By providing a rear handle that forms a continuous loop defining an aperture, this provides the advantage that the rear handle can be made as large as possible, and therefore positioned as far away from the centre of mass of the hedge trimmer as possible, without significantly increasing the overall weight of the hedge trimmer, and in particular without unnecessarily increasing the size and weight of the front handle.

In a preferred embodiment, said first aperture is not arranged in the same plane as said second aperture.

Said front and rear handles may define a continuous loop, and said mounting portion may be formed by the sides of said loop.

Said mounting portion may further comprise a pair of third apertures adapted to pivotably receive the body of the tool.

This provides the advantage that the handle assembly can be pivoted relative to the hedge trimmer blade, to enable use of the blade in a variety of orientations for the same user arm position.

The handle assembly may further comprise first switching means provided on said front handle, and second switching means formed on said rear handle, wherein said power tool is operable on actuation of both first and second switching means.

By providing a first switch on the front handle, and a second switch on the rear handle, wherein the switches must be simultaneously actuated to operate the hedge trimmer, this provides the advantage that the user must first hold the hedge trimmer with two hands before he can operate it, thus ensuring safe and correct handling of the hedge trimmer.

According to another aspect of the present invention, there is provided a power tool comprising:-
a housing;
a motor provided in the housing;
an output shaft adapted to be caused by said motor to execute reciprocating motion; and
a handle assembly as defined above.

The power tool may be a hedge trimmer.

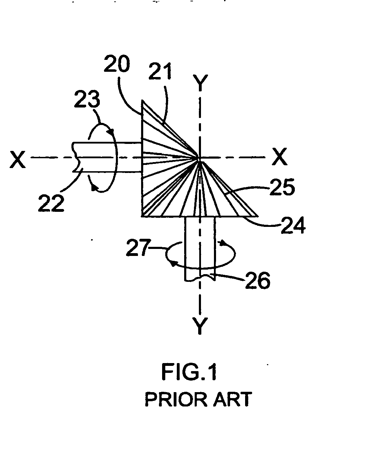

Preferred embodiments of the present invention will now be described, by way of example only and not in any limitative sense, with reference to the accompanying drawings in which:-
Figure 1 is a side view of a prior art truncated conical bevel gear assembly for use in a hedge trimmer;
Figure 2 is a perspective view from a first side of a hedge trimmer of a first embodiment of the present invention;
Figure 3 is a perspective view from below of the hedge trimmer of Figure 2;
Figure 4 is a rear perspective view of the hedge trimmer of Figure 2;
Figure 5 is a side perspective view of the hedge trimmer of Figure 2, from the opposite side as that shown in Figure 2;
Figure 6 is a perspective view from above of a hedge trimmer of a second embodiment of the present invention;
Figure 7 is a side perspective view of the handle assembly and body of the hedge trimmer of Figure 6;
Figure 8 is a side and rear perspective view of the handle assembly and body rear of the hedge trimmer of the present invention with the body portion tilted at an angle to the handle assembly;
Figure 9 is a further side perspective view of the hedge trimmer of Figure 8;
Figure 10a is a cross sectional side view of the gear conversion mechanism of the present invention;
Figure 10b is a top view of the gear conversion mechanism of Figure 10a; and
Figure 11 is a side cross sectional view of the housing of a hedge trimmer incorporating the gear conversion mechanism of Figures 10a and 10b.
Figure 12 is a schematic view of a switching mechanism of the present invention in the open position;
Figure 13 is a schematic view of the switching mechanism of Figure 12 in the closed position;
Figure 14a is a side view of the switching mechanism and relay of the present invention in the open position where the handle assembly is in the horizontal orientation relative to the housing;
Figure 14b is a side view of the switching mechanism of Figure 14A in the partially closed position;
Figure 14c is a side view of the switching mechanism and relay of Figure 14A in which the relay is closed;
Figure 15a is a side view of the switching mechanism of Figure 14A in which the handle assembly is rotated through 90° relative to the housing and the switch and relay are in the open position;
Figure 15b is a side view of the switching mechanism of Figure 15A in the partially closed position;
Figure 15c is a side view of the switching mechanism of Figure 15A in which the relay is closed;
Figure 16a is a cross sectional side view of the hedge trimmer housing with the latch mechanism in the open position;
Figure 16b is a cross sectional side view of the hedge trimmer housing of Figure 17a with the latch mechanism in the closed position;
Figure 17a is a side view of the hedge trimmer housing, with the latch mechanism in the open position; and
Figure 17b is a side view of the hedge trimmer housing of Figure 16a, with the latch mechanism in the closed position and engaging the hedge trimmer handle assembly.

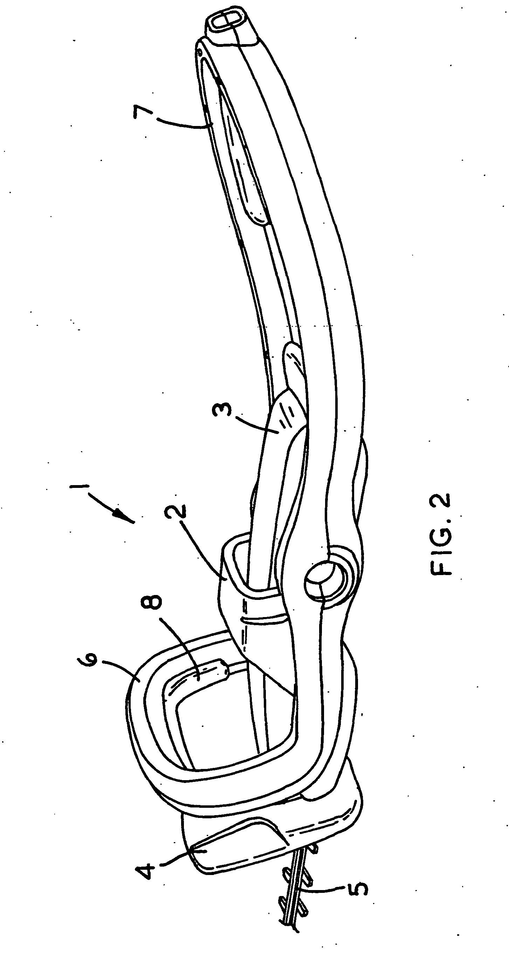

Referring to Figure 2, a hedge trimmer (1) comprises a handle assembly (2) formed from durable plastics material pivotably connected to a housing (3). A guard (4) is formed integrally with the housing (3) and an electric motor (not shown) is disposed axially within the housing (3) such that the axis of rotation of an output shaft (not shown) of the motor is generally parallel to the direction of reciprocating motion of a blade assembly (5).

The blade assembly (5) extends forwardly of the housing (3). The electric motor (not shown) is connected to the blade assembly via a drive conversion mechanism, the operation of which will be described in further detail below. The blade assembly (5) comprises a stationary blade disposed adjacent to a blade adapted to execute reciprocating movement along a longitudinal axis of the stationary blade. In this way, the stationary blade provides a reaction force for the reciprocating blade to grip against and cut. The operation of this type of blade assembly is well known in the art and will not be described in any further detail herein.

The handle assembly (2) comprises a forward handle (6) and a rear handle (7). Both forward and rear handles (6), (7) are formed integrally from moulded durable plastics and enable a user to hold the hedge trimmer in a variety of ways. As is well known in the art, it is desirable for certain power tools such as chainsaws, hedge trimmers and circular saws to have two handles for the user to grip, one with either hand. A two-handle assembly has two advantages. Firstly, when the tool is gripped in both hands it is more stable in the user's hands and therefore easier to control, which enables more accurate and precise cutting. Secondly, a two-handed grip on the hedge trimmer is a lot safer than a single handed grip. It is a lot easier for a user to lose control of a hedge trimmer when gripping it with only one hand.

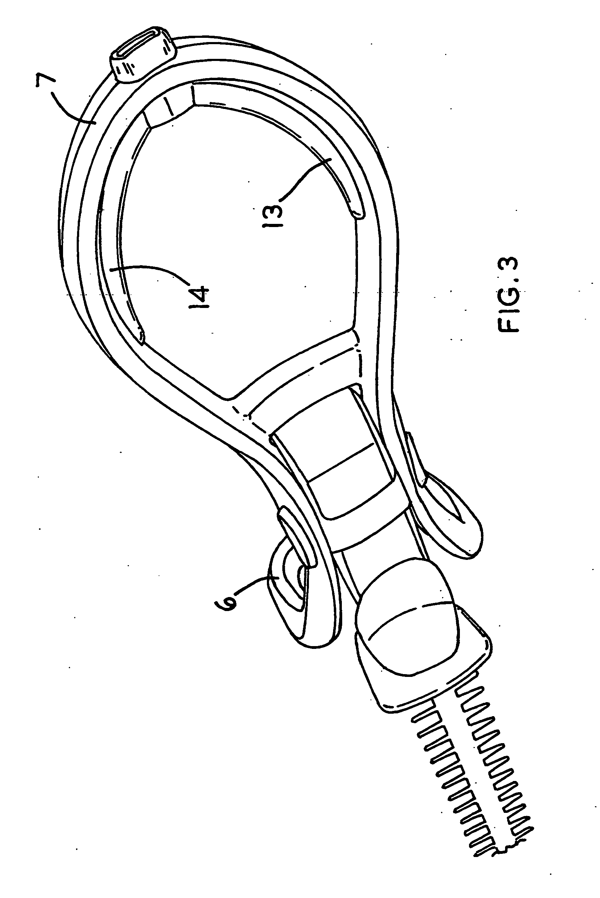

The hedge trimmer is provided with a dual switching mechanism. In order to activate the hedge trimmer, the user must simultaneously depress a forward switch (8) and either one of rear switches (13), (14), as shown in Figure 3. As a result, it is impossible for the user to activate the hedge trimmer without first gripping it with both hands.

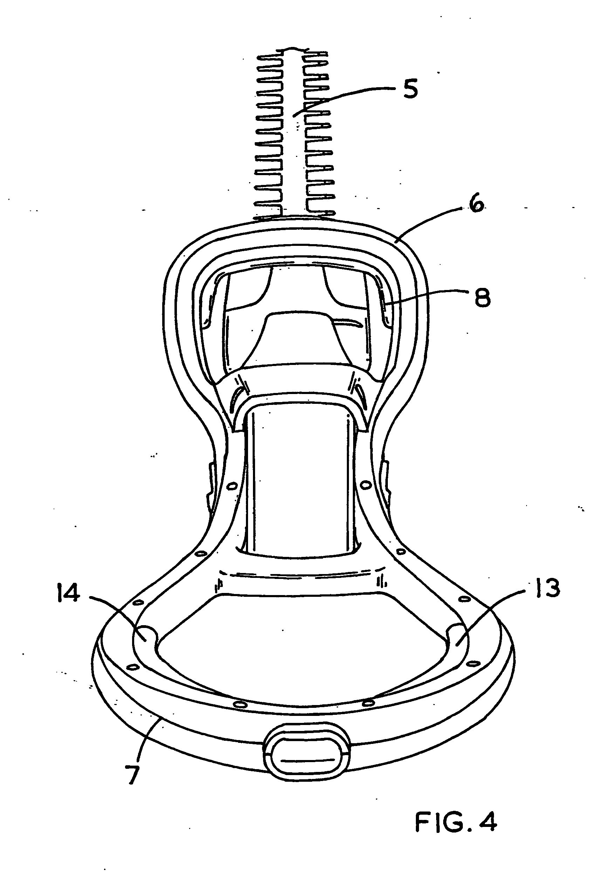

It is desirable when operating a hedge trimmer with the blade in the vertical plane for the user to be able to grip the hedge trimmer without twisting either wrist at an angle relative to the other. Referring to Figure 4, the present invention provides a handle assembly which allows a left-handed user and a right-handed user to operate the hedge trimmer in any orientation with the wrists of each arm aligned, i.e. with the wrists arranged along parallel axes. For example, the right-handed user would grip forward handle (6) with his left hand such that the fingers of his left hand pass around the front of forward handle (6) and grip switch (8) with the fingertips of his left hand. The right-handed user would place his right hand around rear handle (7) such that the fingertips of his right hand grip switch (13). It can be seen that in this orientation the right-handed user holds the hedge trimmer such that the insides of his wrists are facing each other and his wrists are aligned in planes generally parallel to the plane of the blade. The same can be said of the left-handed user. However the left-handed user would grip forward handle (6) with his right hand and rear handle (7) with his left hand such that the fingertips of his left hand are in a position to depress switch (14).

This feature of the present invention offers several advantages over the prior art. Firstly, holding the hedge trimmer without a twist in the user's arm is more comfortable, and affords the user more control over the hedge trimmer blade. Secondly, prior art hedge trimmers must be held with a twist in the user's arm. Over prolonged periods of use, the user's arms may tire, and apply an unwanted torque to the hedge trimmer as the muscles of the user's forearms attempt to orientate themselves into a more comfortable position. This makes it more difficult to accurately cut with the hedge trimmer.

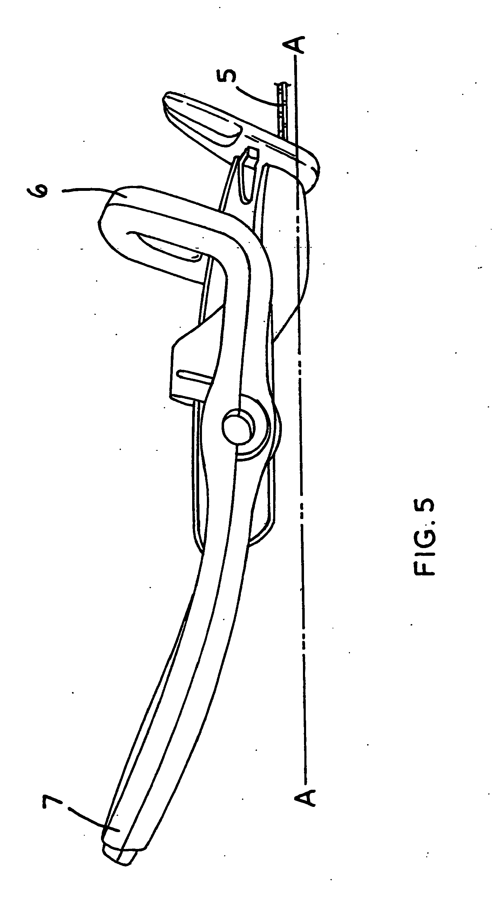

Referring to Figure 5, line A-A represents the plane of blade assembly (5). The plane of rear handle (7) is at an angle to line A-A such that the rear part of rear handle (7) is raised substantially away from the plane of blade (5). As a result of this, the knuckles of the hand of the user that is gripping rear handle (7) are raised away from the surface of the hedge being cut. This provides the advantage that the user's knuckles avoid any grazing or cutting resulting from contact with the hedge, or with the ground when carrying out low cutting.

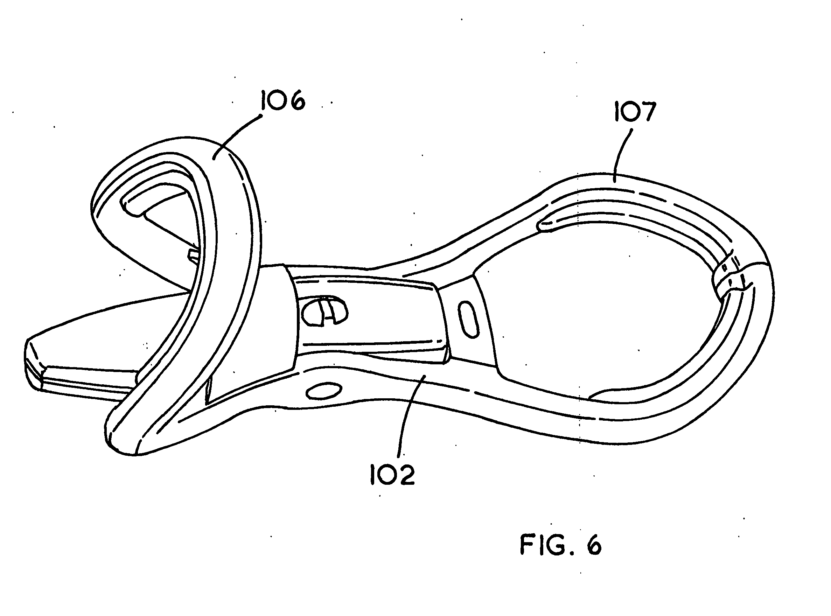

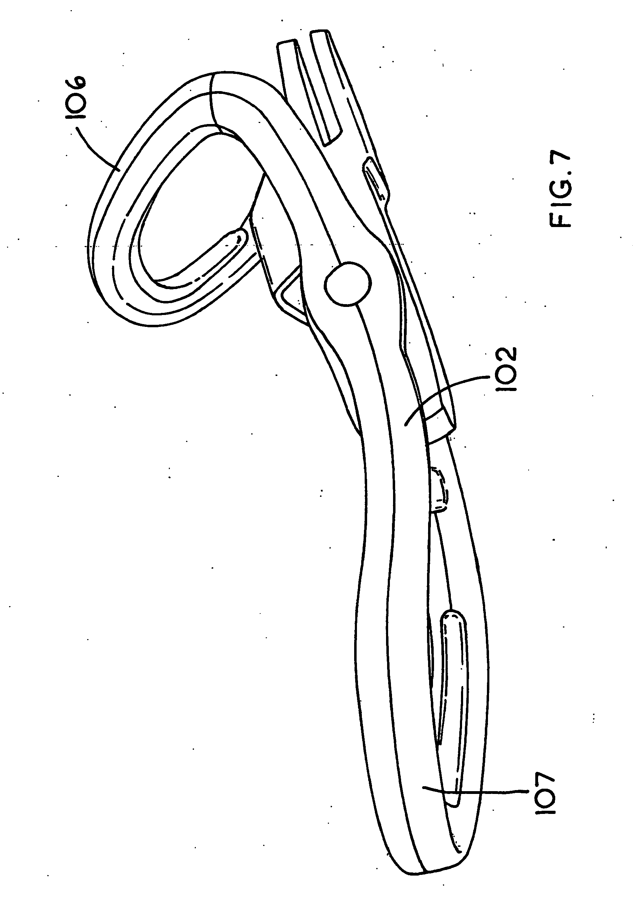

Referring to Figures 6 and 7, in which parts common to the embodiment of Figures 2 to 5 are denoted by like reference numerals but increased by 100, a second embodiment of the handle assembly (102) is shown. It can be seen that front handle (106) is swept back at a greater angle relative to the plane of the blade compared with the angle of front handle (6) relative to the plane of blade (5) as shown in Figure 5. This feature makes the hedge trimmer more comfortable for the user to operate provided that the centre of mass of the hedge trimmer lies in the region between front handle (106) and rear handle (107) which will usually be the case, since the heaviest parts of the hedge trimmer are generally the blade and the motor housing. The user does not have to stretch his forward arm as far relative to the rear handle as he would do when using the handle assembly shown in Figure 5.

It is therefore desirable to have the rear handle located as far away from the centre of mass as is possible. Since the two heaviest components of a hedge trimmer are generally the electric motor disposed in the housing and the forward blade assembly, the centre of mass of the hedge trimmer generally lies between the motor and the blade.

In order to make the hedge trimmer easier to manipulate, it is desirable to locate the rear handle (7), (107) as far away from the centre of mass as possible. This is because the further away the rear handle is from the centre of mass, the less force is needed to be applied to the rear handle to apply the same torque to the hedge trimmer. One way of achieving this is to make the rear handle as large as possible without increasing the weight of the rear handle, and for this reason the rear handle (7), (107) of the hedge trimmer is formed into the curved bar loop shape with a space enclosed as is best shown in Figure 2 or in Figure 6.

The handle assembly (7) of the present invention enables the user to operate the hedge trimmer for cutting a horizontal surface such that the wrists of the user's arms are oriented generally parallel to one another. Also, as described above, when the blade is required to be operated in the vertical plane, the user can operate the hedge trimmer with his wrists arranged in generally parallel vertical planes.

A problem can arise with prior art hedge trimmers when a horizontal surface to be cut is high up relative to the user such as the horizontal upper surface of a tall hedge, as the user may have to stretch and hold the hedge trimmer above his head. This is undesirable for the user especially when the user is on stepladders or other apparatus to raise the user from the ground. When the user is holding the hedge trimmer high up relative to his body or even holding the hedge trimmer above his head in order to cut a horizontal surface, the user is less stable than he would be were he operating the hedge trimmer further down relative to his body. Furthermore, although hedge trimmers can generally be operated upside down, it has been found that consumers are generally very reluctant to operate hedge trimmers upside down whilst held above the head.

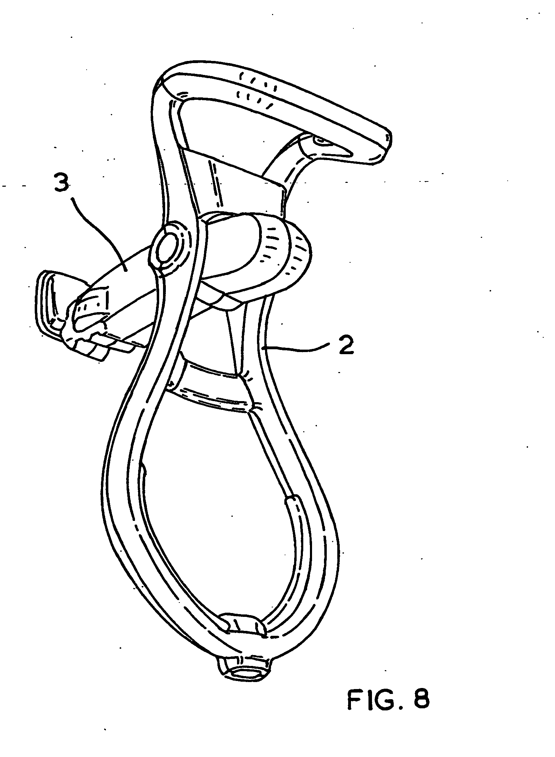

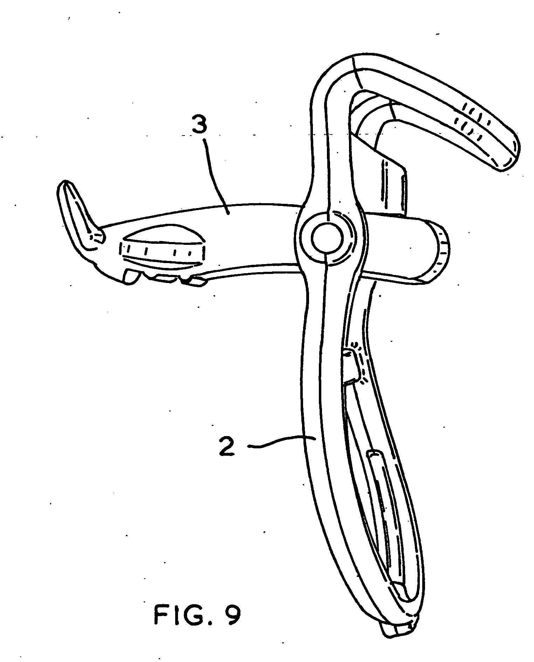

Referring to Figures 8 and 9, the hedge trimmer is shown without the forwardly projecting blade where the body housing (3) has been pivoted relative to the handle assembly (2). In this orientation, the hedge trimmer is operated in exactly the same way as before, with the user gripping both forward and rear handles and depressing forward and rear switches respectively. This feature makes it easier for the user to view along the plane of the blade when cutting the top of a tall hedge, and more comfortable for horizontal cutting in a position high up relative to the user's body. This is because instead of the user having to hold the handles horizontally at eye level as with prior art hedge trimmers, the user can now hold the handle assembly in front of his body whilst looking along the plane of the blade.

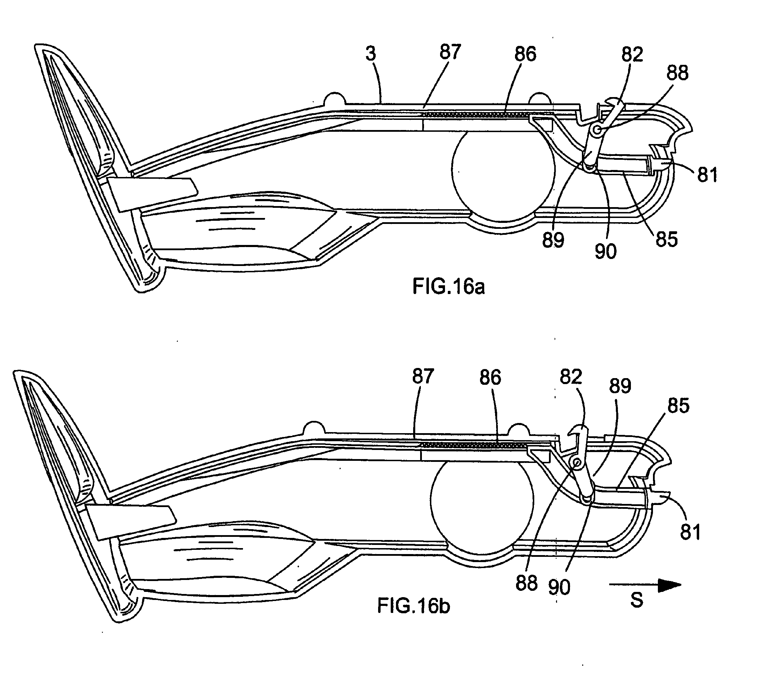

Referring to Figures 16a and 16b, the operation of the latch mechanism for holding the hedge trimmer in either of the orientations described above will now be described.

A first retaining member (81) is mounted at a first end of a bracket (85), and the other end of bracket (85) is mounted on a compression spring (86). Compression spring (86) is fixed to the body of the hedge trimmer housing at (87). A second retaining member (82) is able to pivot about a pin (88), pin (88) being fixed relative to the housing (3). Second retaining member (82) is also rigidly fixed to a first end of a lever (89), the second end of lever (89) being slidable in a second bracket (90), second bracket (90) being formed in first bracket (85).

When the first bracket (85) is moved in the direction of arrow S from the configuration shown in Figure 16a to the configuration of Figure 16b as a result of compression spring (86) extending, it can be seen that firstly the first retaining member (81) is pushed out of the back of the housing (3). Secondly, as a result of lever (89) sliding upwardly in second bracket (90), the second retaining member (82) is pivoted about pin (88) and out of housing (3).

In the configuration of Figure 16b, either the first or second retaining means (81, 82) will engage with a corresponding portion of the handle assembly (not shown), and a user would release the mechanism simply by pushing the retaining member which is not in engagement with the handle assembly back into the housing, as this action would also result in retracting the other retaining member from engagement with the handle assembly.

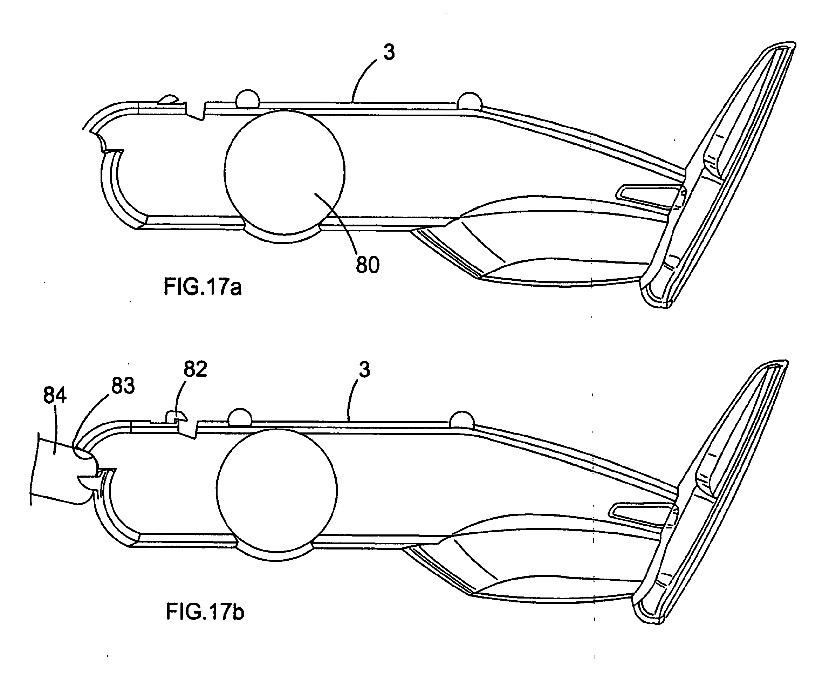

Referring to Figures 17a and 17b, the hedge trimmer housing (3) engages the hedge trimmer handle assembly at a cylindrical pivot (80) such that the housing (3) can rotate about pivot portion (80). The hedge trimmer can be operated in two separate orientations, the in-line orientation as shown in Figure 2, or the orientation shown in Figures 8 and 9 where the hedge trimmer housing (3) is rotated through 90° relative to the hedge trimmer handle assembly (2).

In order to retain the hedge trimmer housing (3) in position relative to the handle assembly (not shown), the housing (3) is provided with a first retaining member (81) and a second retaining member (82). Both first and second retaining members (81, 82) are retractable relative to the housing (3), and are shown in their respective retracted positions in Figure 17a. The rear end of housing (3) has an integrally formed abutment surface (83) shaped to receive an engaging portion (84) of handle assembly (2). It can be seen that the engaging portion (84) of the handle assembly is received between abutment surface (83) of the housing (3) and the first retaining member (81) such that the engaging portion (84) can not move in either the upwards or downwards direction relative to housing (3). The first retaining member (81) is so shaped that the engaging portion (84) can slide into engagement with abutment surface (83) by displacing retaining member (81), but cannot move out of engagement with abutment surface (83) until retaining member (81) is retracted into the housing (3).

When the hedge trimmer is used in the orientation shown in Figures 8 and 9, second retaining member (82) grips a second engaging portion (not shown) of the handle assembly, and in this orientation even though first retaining member (81) is deployed, it is not in use. In order to release the latch mechanism, either first or second retaining members (81, 82) can be depressed by the user, depending on which one is not in engagement with the handle assembly, which simultaneously moves both first and second retaining members (81, 82) into the housing.

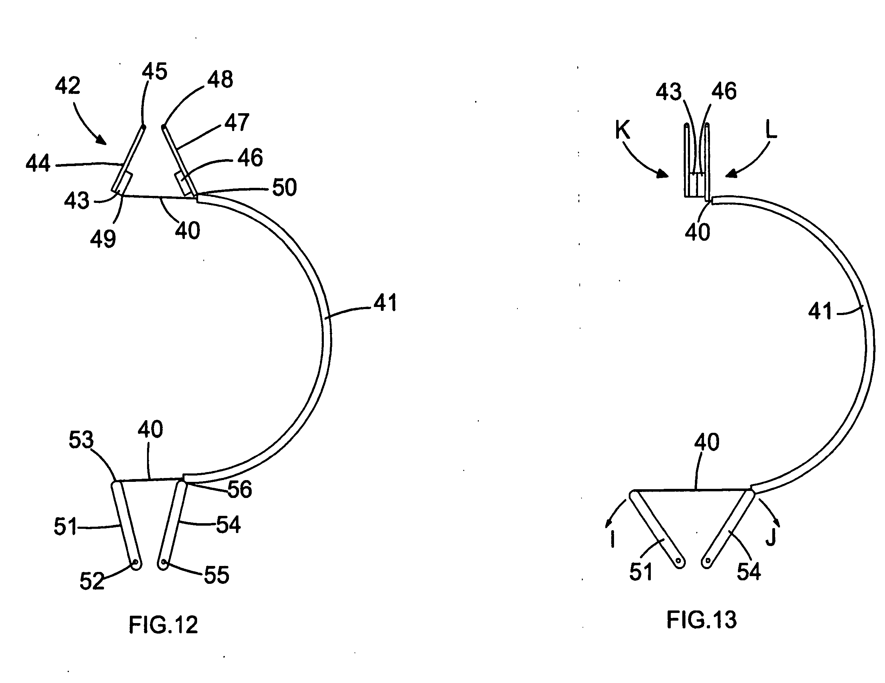

Referring to Figures 12 and 13, the dual switching mechanism of the present invention will now be described.

A bowden cable, such as that used to operate the brakes on a pedal bicycle, consists of an inner cable (40) surrounded by an outer sheath (41). The inner cable (40) passes through the outer cable (41) and is slidable relative thereto. An electrical contact shown generally by (42) comprises a first metallic pad (43) mounted on an arm (44), the arm being pivotable about point (45) and a second metallic pad (46) mounted on a second arm (47), the second arm being pivotable about point 48 such that metallic pads (43) and (46) can be pivoted towards each other, and into contact.

A first end of inner cable (40) is attached to metallic pad (43) at point (49), and a first end of outer cable (41) is attached to arm (47) at point (50).

A first switch (51) comprises an arm that is pivotable about point (52), the arm being attached to a second end of inner cable (40) at point (53). A second switch (54) is pivotable about point (55) and is attached to the outer cable at point (56).

Referring to Figure 13, first switch (51) and second switch (54) are operated by a user applying pressure and pivoting them away from each other in the direction shown by arrows I and J. As first switch (51) is rigidly attached to the inner cable (40), and second switch (54) is rigidly attached to the outer cable (41), the pivoting motion of the switches in opposite directions draws the inner cable (40) through outer cable (41), whilst at the same time second switch (54) pushes outer cable (41) around inner cable (40). As a result of this, inner cable (40) pulls first metallic pad (43) in the direction of arrow K, and outer cable (41) pushes the second metallic pad (46) in the direction of arrow L such that pads (43), (46) come into contact.

It can be seen then that if only one switch, either (51) or (54), is moved whilst the other switch remains in the open position, the resulting movement of the bowden cable would only consist of independent movement of either the inner (40) or outer cable (41) such that the contact would only be half closed, as only one metallic pad would be moved into a contacting position.

It should also be appreciated that further embodiments of a switching mechanism of this type are possible with more than two switches. For example, a single inner cable (40) can be provided with a plurality of outer sheaths (41), each outer sheath moving independently of one another which provides the option of adding more switches and/or electrical contacts. It should also be noted that in practice, taking the example of a two switch mechanism, the mechanism will be set up such that closing one switch will have the result of partially closing the contact by more than half the distance required to fully close the contact, and closing the second switch will also have the result of more than half closing the contact. In this way, it is ensured that the contact will actually be closed when both switches are closed.

It should also be appreciated that Figures 12 and 13 are only a schematic representation of the switching mechanism, and in practise the contacts be in the form of something other than pivoting metallic pads, as will be described below.

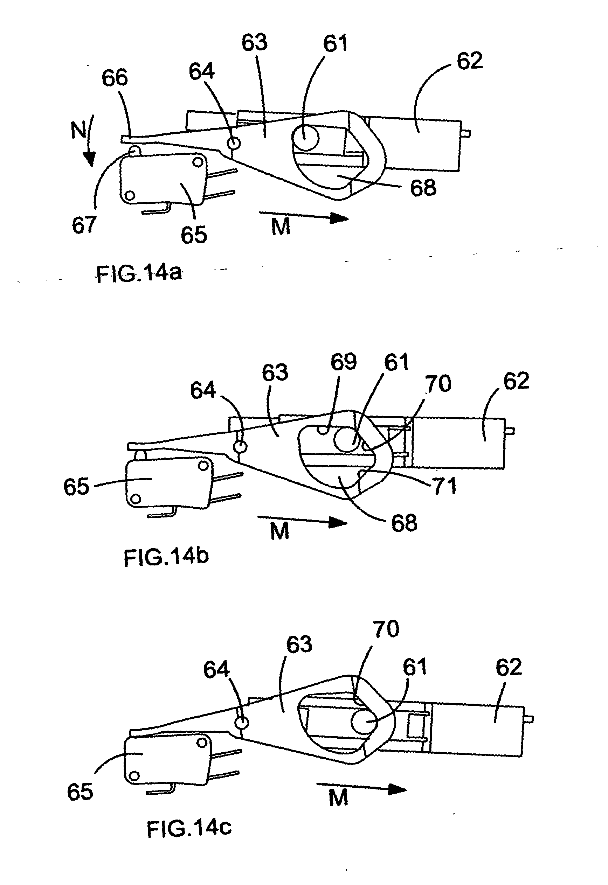

Referring to Figures 14a to 15c, the operation of the pivoting switching mechanism will now be described.

Referring to Figure 14a, a pin (61) is held in a pin housing (62) which is disposed in the hedge trimmer handle assembly (not shown). The pin (61) and pin housing (62) are slidable relative to the hedge trimmer handle assembly (not shown) in the direction of arrow M. Pin (61) projects outwardly from housing (62) and is received in an aperture (68) formed in an arm member (63). Arm member (63) is mounted to the hedge trimmer body housing (not shown) by a pin (64). Arm member (63) is pivotable about pin (64) in the direction of arrow N relative to the hedge trimmer housing (not shown). An electrical relay (65) is disposed in the hedge trimmer housing (not shown) such that when arm (63) is pivoted in the direction of arrow N, a remote end (66) of arm (63) depresses a switch (67) and closes relay (65).

Referring now to Figure 14b, when a first switch (not shown), is depressed by the user, a cable (not shown) causes pin (61) to slide in the direction of arrow M along cam surface (69) provided in aperture (68). It can be seen, however, that the movement of pin (61) is insufficient to cause arm member (63) to pivot about pin (64) and close relay (65). Referring now to Figure 14c, in order to close the relay, the user must depress a second switch (not shown) provided on the handle assembly, which causes pin (61) to slide a further distance in the direction of arrow M along a second cam surface (70), provided in aperture (68), causing arm member (63) to pivot about point (64) and close the relay (65).

It can therefore be seen that in order to close the relay (65), a user must depress both first and second hedge trimmer switches, which in the embodiment of the hedge trimmer shown in Figure 4 for example, would be switch (8) formed on front handle (6) and either one of switches (13), (14) formed on rear handle (7).

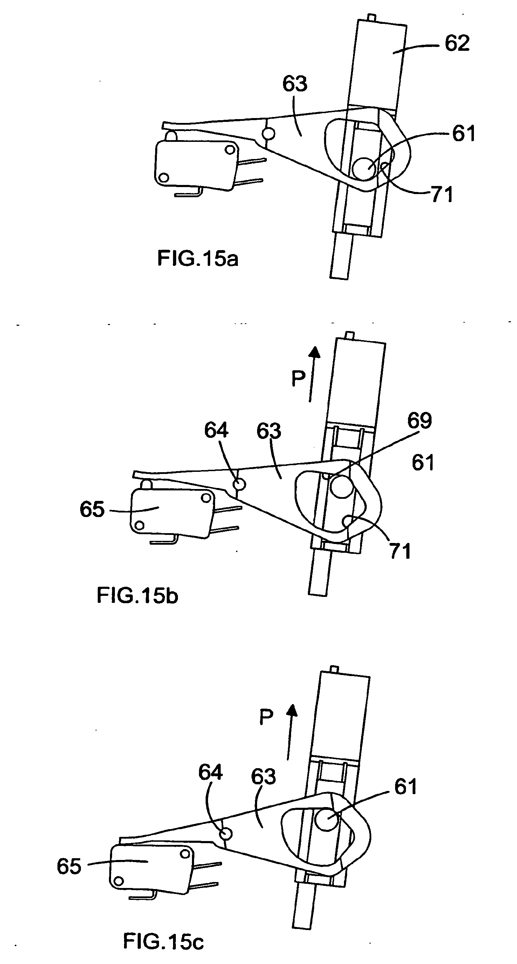

Referring to Figure 8, the hedge trimmer body housing (3) can be pivoted at 90° relative to the handle assembly (2). Referring now to Figure 15a, the pin housing (62) is rotated through 90° from the position shown in Figure 14a. Pin (61) now abuts third cam surface (71), and as the hedge trimmer housing has remained stationary, arm member (63) remains in the same position.

Referring now to Figure 15b, when a user depresses a first switch (not shown), in the same way as shown in Figure 14b except at 90° to figure 14b, pin (61) moves through a first distance in the direction of arrow P from cam surface (71) to cam surface (69). It can be seen however, that pin (61) has not moved sufficiently to pivot arm (63) about pin (64) to close relay (65).

Referring now to Figure 15c, in order to close relay (65), the user must depress a second switch (not shown) which further moves pin (61) in the direction of arrow P thus pivoting arm (63) about pin (64) and completing the closure of relay (65).

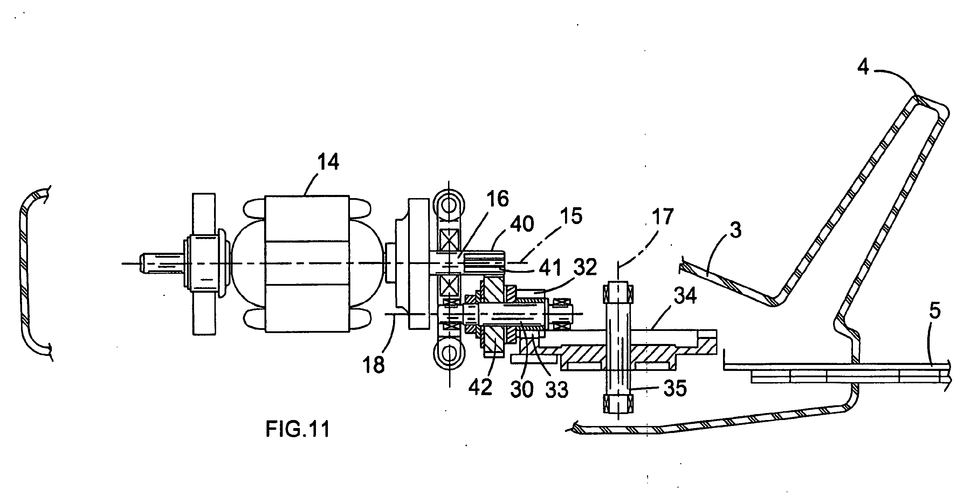

Referring now to Figure 11, an electric motor (14) is disposed axially in housing (3), such that the axis of rotation (15) of the motor output shaft (16) is parallel to the plane of blade (5). It can be seen therefore that in order to drive the blade mechanism, the direction of rotation about axis (15) needs to be converted through 90° into rotation about axis (17).

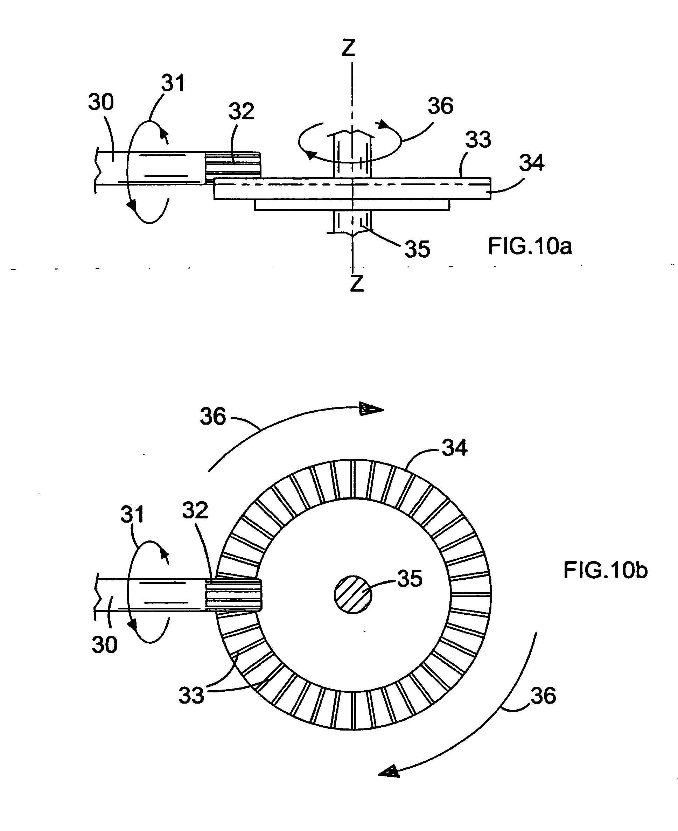

As shown in Figures 10a and 10b, the drive conversion mechanism of the present invention for converting rotation about a first axis to rotation about a second axis comprises a shaft (30) rotating in the direction of arrow (31). A plurality of axially aligned parallel teeth (32) are formed at the end of shaft (30). Parallel teeth (32) intermesh with a second plurality of radial teeth (33) formed on the upper surface of a gear plate (34). Gear plate (34) is mounted on a second shaft (35) such that gear plate (34) is free to rotate about an axis Z-Z. As a result of this, the rotation of shaft (30) imparts rotation to gear plate (35) in the direction of arrow (36) due to the reaction between teeth (32) and teeth (33).

This method of converting rotation about a first axis into rotation about a second axis generally perpendicular to said first axis is substantially cheaper to manufacture than prior art methods, as the engineering tolerances between teeth (32) and shaft (30) and teeth (33) on the gear plate (34) can be less than those needed to be achieved with the conical gears of the prior art drive mechanisms.

Referring again to Figure 11, the incorporation of the drive conversion mechanism of Figures 10a and 10b into the hedge trimmer of the present invention will now be described.

An electric motor drives a rotary output shaft (16) adapted to rotate about axis (15). A plurality of teeth (40) are formed on the edge of shaft (16) and intermesh with a second plurality of teeth (41) formed on a gear (42). Gear (42) is adapted to rotate about axis (18) which is parallel to axis (15), and as gear (42) comprises a larger number of teeth (41) than the number of teeth (40) formed on output shaft (16), the rotational speed of gear (42) is less than that of output shaft (16). Gear (42) is mounted on a shaft (30) which has a further set of teeth (32) formed around the edge of shaft (30). Teeth (32) intermesh with a plurality of radial teeth (33) formed on the upper surface of a gear plate (34). Gear plate (34) is mounted on shaft (35) and adapted to rotate about axis (17) such that the rotation of shaft (30) about axis (18) is converted to rotation about axis (17) generally perpendicular to axis (18).

It can therefore be seen that the teeth on shaft (32) can still drive gear plate (34) despite variations in position between the shaft and the gear plate, provided the teeth on the shaft still engage the teeth on the gear plate. The shaft and gear plate therefore do not need to be as accurately located relative to each other as the bevel gears of the prior art.

It can also be seen that the inline rotation of the motor output shaft (16) is converted into rotation in the plane of blade (5). The blade (5) is connected to gear plate (34) via a drive conversion mechanism for converting rotary motion about axis (17) into linear reciprocating motion perpendicular to axis (17) in a manner which will be familiar to persons skilled in the art, such as a scotch yoke mechanism. Mechanisms of this type are well known in the art and will not be described herein in any further detail.

It will be appreciated by persons skilled in the art that the above embodiments have been described by way of example only and not in any limitative sense, and that various alterations and modification are possible without departure from the scope of the invention as defined by the appended claims.

## Claims

1. A handle assembly for a power tool having a housing, a motor provided in the housing and an output shaft adapted to be caused by the motor to execute reciprocating motion, the assembly comprising:-
a front handle;
a rear handle integral with said front handle; and
a mounting portion adapted to be mounted to the body of the tool;
wherein said front handle defines a first aperture, and said rear handle defines a second aperture larger than said first aperture.

2. An assembly according to claim 1, wherein said first aperture is not arranged in the same plane as said second aperture.

3. An assembly according to any one of the preceding claims, wherein said front and rear handles define a continuous loop, and said mounting portion is formed by the sides of said loop.

4. An assembly according to claim 3, wherein said mounting portion further comprises a pair of third apertures adapted to pivotably receive the body of the tool.

5. An assembly according to any one of the preceding claims, further comprising first switching means provided on said front handle, and second switching means formed on said rear handle, wherein said power tool is operable on actuation of both first and second switching means.

6. A power tool comprising:-
a housing;
a motor provided in the housing;
an output shaft adapted to be caused by said motor to execute reciprocating motion; and
a handle assembly according to any one of the preceding claims.

7. A power tool according to claim 6 wherein the power tool is a hedge trimmer.

## Patentansprüche

1. Griffanordnung für ein angetriebenes Werkzeug mit einem Gehäuse, einem im Gehäuse vorgesehenen Motor und einer Ausgangswelle, die angepasst ist, um vom Motor verursacht eine Hin- und Herbewegung auszuüben, wobei die Anordnung einen vorderen Griff,
einen integral mit dem vorderen Griff ausgebildeten hinteren Griff und
einen Befestigungsbereich aufweist, der zur Befestigung am Körper des Werkzeugs angepasst ist,
wobei der hintere Griff eine erste Öffnung bildet und der hintere Griff eine zweite Öffnung größer als die erste Öffnung bildet.

2. Anordnung nach Anspruch 1, bei der die erste Öffnung nicht in der gleichen Ebene wie die zweite Öffnung angeordnet ist.

3. Anordnung nach einem der vorhergehenden Ansprüche, bei der die vorderen und hinteren Griffe eine durchgehende Schlaufe bilden und der Befestigungsbereich durch die Seiten der Schlaufe gebildet wird.

4. Anordnung nach Anspruch 3, bei der der Befestigungsbereich ferner ein Paar dritter Öffnungen aufweist, die zur schwenkbaren Aufnahme des Körpers des Werkzeugs angepasst sind.

5. Anordnung nach einem der vorhergehenden Ansprüche, ferner mit am vorderen Griff vorgesehenen ersten Schaltmitteln und am hinteren Griff vorgesehenen zweiten Schaltmitteln, wobei das angetriebene Werkzeug bei Betätigung beider ersten und zweiten Schaltmittel betreibbar ist.

6. Angetriebenes Werkzeug mit
einem Gehäuse,
einem im Gehäuse vorgesehenen Motor,
einer Ausgangswelle, die angepasst ist, um vom Motor verursacht eine Hin- und Herbewegung auszuüben, und
einer Griffanordnung gemäß einem der vorhergehenden Ansprüche.

7. Angetriebenes Werkzeug nach Anspruch 6, bei dem das angetriebene Werkzeug eine Heckenschere ist.

## Revendications

1. Un ensemble de poignées pour un outil motorisé, comprenant un boîtier, un moteur prévu dans le boîtier et un arbre de sortie adapté pour exécuter, sous l'action du moteur, un mouvement en va et vient, l'ensemble comprenant :
une poignée avant ;
une poignée arrière, réalisée d'une seule pièce avec la dite poignée avant ; et
une partie de montage adaptée pour être montée sur le corps de l'outil,
dans lequel ladite poignée avant définie une première ouverture, et ladite poignée arrière définie une deuxième ouverture, plus grande que la première ouverture.

2. Un ensemble selon la revendication 1, dans laquelle ladite première ouverture n'est pas agencée dans le même plan que ladite deuxième ouverture.

3. Un ensemble selon l'une quelconque des revendications précédentes, dans lequel lesdites poignées avant et arrière définissent une boucle continue et ladite partie de monture est formée par les côtés de ladite boucle.

4. Un ensemble selon la revendication 3, dans lequel ladite partie de monture comprend en outre une paire de troisième ouvertures, adaptées pour loger à pivotement le corps de l'outil.

5. Un ensemble selon l'une quelconque des revendications précédentes, comprenant en outre des premiers moyens de commutation, prévus sur ladite poignée avant, et des deuxième moyens de commutation, formés sur ladite poignée arrière, dans lequel ledit outil motorisé est susceptible de fonctionner à l'actionnement, à la fois des premier et deuxième moyens de commutation.

6. Un outil motorisé, comprenant :
un boîtier ;
un moteur, prévu dans le boîtier ;
un arbre de sortie, adapté pour être actionné par ledit moteur pour exécuter un mouvement de va et vient ; et
un ensemble de poignées selon l'une quelconque des revendications précédentes.

7. Un outil motorisé selon la revendication 6, dans lequel l'outil motorisé est un taille-haie.
